# EUROPEAN PATENT APPLICATION

(11) **EP 3 550 403 A2**
(43) Date of publication of application: **09.10.2019**
(21) Application number: 17878860.0
(22) Date of filing: 05.12.2017
(51) Int. Cl.: G06F 3/00, G09B 21/02

(54) **DEVICE AND METHOD FOR RECEIVING AND TRANSMITTING INFORMATION USING BRAILLE**

(30) Priority: 05.12.2016 RU 2016147556
(71) Applicant: Belomoev, Fedor Valentinovich, St.Petersburg 196605 (RU)
(72) Inventor: Belomoev, Fedor Valentinovich, St.Petersburg 196605 (RU)
(74) Representative: Tobiasz-Dumania, Katarzyna
(86) International application number: PCT/RU2017/000904
(87) International publication number: WO 2018/106149

(57) **Abstract**

The present invention relates to a device in form of a tablet for receiving and transmitting information using Braille, and to a method for receiving and transmitting information with the use of said device by visually impaired people. Said device consists of cells which, in an information-receiving mode, generate relief point symbols of Braille for reading, and, in an information-transmitting mode, said cells generate Braille symbols in the form of a keyboard layout, and information is input by pressing on the appropriate cells.

## Description

### Field of the Disclosure

The present disclosure relates to information technologies and can be used in the course of tactile transmitting and receiving of information encoded by the tactile raised dots system of Louis Braille using computers, mobile- or smartphones, electronic devices, recorders control systems and as a stand-alone device to expand communication abilities and limits for people with impaired vision.

In particular, the present invention is a device in the form of a tablet or keyboard having cells positioned it in several lines, which are used to display information and enter information by the tactile raised dots system of Louis Braille.

### Background of the Disclosure

At present, Braille display devices are usually used for transmitting and receiving information by blind or visually impaired people. Refreshable Braille displays are electromechanical devices that form dots of Braille characters on a flat surface, which can be read by tactile receptors on the tips of fingers. These devices operate as keyboards having a software, manual controllers and actuators connected as an additional device to a computer via USB or Bluetooth interface.

The disadvantage of such devices is the use of the known cell, in which expensive piezoelectric actuators are used to form a tactile raised dots symbol, which require continuous current flow through the piezoelectric actuators for their operation. It causes warming up of these devices. It also limits operation in cold temperature conditions. Operation of such devices require excessive power consumption and also excludes the possibility of saving a Braille symbol with such a cell when the power supply of the tactile display is turned off. Such devices are very expensive and cumbersome, and are limited in the volume of displayed information.

Russian patent No. 2101771, published on 01.10.1998, discloses a tactile display cell, in which an alternative variant with a plurality of mobile actuators is proposed. Each of the actuators includes an element of magnetic memory (EMM), formed by a core made of medium coercive magnetic material with a rectangular hysteresis loop (RHL), on which control windings are installed to create and destroy the magnetic memory of the core. Changing the Braille symbol is provided by current pulses fed into the control windings. Permanent saving of the Braille symbol is provided when the power supply of the tactile display is turned off, along with preventing excessive overheating of the device.

The described device is expensive and quite difficult to manufacture, because the actuator element contains complex and small mechanisms of electromagnetic materials. The described device also solves a limited scope of operating problems, i.e. maintaining the raised dots shape when power supply is turned off and preventing excessive overheating of the device. Such solution does not allow creating a multi-line input and output device, and using its parts as a keyboard for data entry.

The Russian patent No. 2355017, published 10.05.2009, discloses a device for displaying points of Braille. In this solution, the Braille font points are displayed by installing a recognition rod in the receiving hole that can be moved up and down, installing a head having many electronic pins on the guide axis below the receiving hole and selective extending the rods. However, the described solution is technically complicated and difficult to manufacture. It does not allow creating a compact device. Such solution also does not allow creating a multi-line input and output device, and using its parts as a keyboard for data entry.

Currently, people with visual impairment use a limited way to enter information, when the Braille displays use the Perkins keyboard, which was previously used to print Braille on typewriters, to form information points, forming raised dots on paper. The keyboard consists of six or eight keys, where each key is responsible for a specific dot in the Braille character font. However, the described input method is outdated technically and is quite laborious, given that the process of entering information and typing takes a long time.

It is worth noting that creating a device with a compact keypad for entering information using Braille characters which has a full set of alphabet keys, similarly to existing keyboards used by sighted people, and functioning both in the information receiving mode and in the information transmitting mode previously was not possible due to the large dimensions of the cell, which forms the raised-dot shape of the Braille font symbol, and the existing standards for writing of the raised-dot Braille font.

### Summary of the Disclosure

An object of the present invention is to provide a compact and inexpensive device allowing transmitting and receiving information by Braille, which is simple for manufacture, easy to maintain and use by people with visual impairment.

This goal was achieved by providing a device in the form of a tablet comprising compact cells which forms raised-dot symbols of Braille font, the device that can be used both for transmitting and receiving information by Braille.

The proposed device does not contain expensive piezoelectric elements and magnetic components. The proposed device is compact due to small sizes of cells and operating mechanism. It allows developing a device with multi-line arrangement of symbols of Braille font. Further, the principle of information input is changed in this device.

The proposed device is simple and convenient to use, and allows communicating people with visual impairments, particularly in the mobile device mode.

According to one aspect of the present invention, a cell of a device for transmitting and receiving information by Braille is provided, the cell comprises:
- cell cases with cavities in form of rectangular parallelepipeds,
- pins made in form of rectangular parallelepipeds and placed within the cavities of the cell cases, where each of these fingers has a bulge that forms a relief defined as one dot in Braille, and a slot having an internal thread;
- rods with external thread, which fits into the slots of the pins, placed in the cavities under the pins,
- actuators, on which the rods are fixed, to bring the rods into rotational motion,
- a plate located above the cell and containing openings for the bulges of the pins.

According to one embodiment of the present invention, the cell of the present invention comprises six or eight cavities in form of rectangular parallelepipeds.

According to one embodiment of the present invention, a protective elastic film is placed between the plate and the cell.

According to another aspect of the present invention, a device in form of a tablet for transmitting and receiving information by Braille is provided, the device comprises:
- a housing,
- plurality of cells disclosed above,
- plurality of buttons located on the housing of the device under each cell,
- a actuator control unit functionally connected with the actuators,
- a means for communication with a computer, a smartphone or an Internet access point, functionally connected with the actuator control unit and with the buttons.

According to one embodiment of the present invention, the cells of the device of the present invention are arranged in one line or several lines.

According to one embodiment of the present invention, the means of communication of the device according to the present invention is a wireless means transmitting data via Wi-Fi or Bluetooth protocol.

According to one embodiment of the present invention, the means of communication of the device according to the present invention is a wired means transmitting data via a cable.

According to one embodiment of the present invention, the device according to the present invention further comprises an integrated power supply or the device uses an external power supply.

According to another aspect of the present invention, a method for transmitting and receiving information by Braille using the device disclosed above is provided, where:
- in the mode of receiving information, said information is converted into Braille dot symbols, transmitted to the actuator control unit, and an embossed text is formed using the cells of the device,
- in the mode of transmitting information, the cells of the device form Braille characters in the form of a keyboard layout, the transmitted information is entered by pressing the corresponding cells of the device, and transmitted information is transmitted via the communication means to a computer, a smartphone or an Internet access point.

This device will be described in more detail below with reference to the corresponding drawings.

### Brief Description of Drawings

Figure 1 depicts a scheme of portion of the cell in a vertical section, in which the following elements are defined: elastic film (1), plate (9) with openings, cell cases (6) containing a cavity in the form of a rectangular parallelepiped containing pin (3) having bulge (2) which forms a relief defined as a dot in Braille, where the pin (3) is made in form of a rectangular parallelepiped with a slot having internal thread (4), cylindrical rod (5) with an external thread that fits into the slot of pin (3) and is fixed on actuator (7).

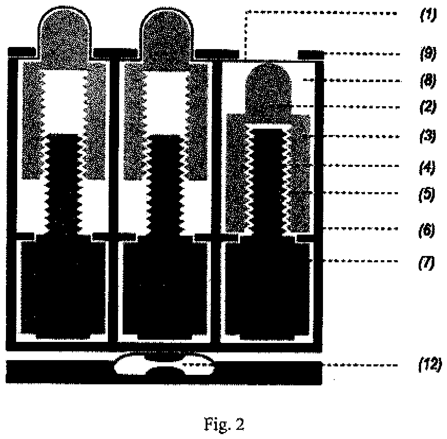

Figure 2 depicts a scheme of portion of the cell in a vertical section, in which the following elements are defined: elastic film (1), plate (9) with openings, cell cases (6) containing a cavity in the form of a rectangular parallelepiped containing pin (3) having bulge (2) which forms a relief defined as a dot in Braille, where the pin (3) is made in the form of a rectangular parallelepiped with a slot having internal thread (4), cylindrical rod (5) with an external thread that fits into the slot of pin (3) and is fixed on actuator (7), button (12) located on the housing of the device under the cell.

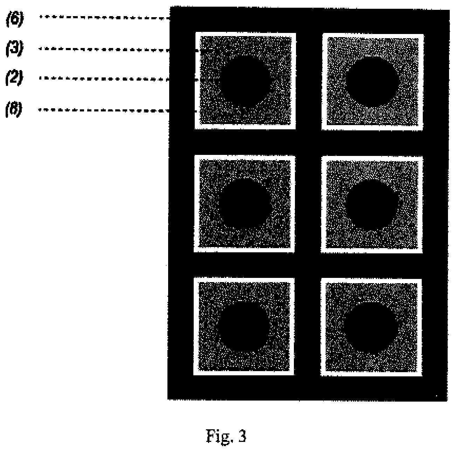

Figure 3 depicts a top view of the cell without plate (9) and elastic film (1), in which the following elements are defined: bulge (2) of pin (3), which forms a relief defined as a dot in Braille, pin (3) made in the form of a rectangular parallelepiped and locked within cavity (8) made in the form of a rectangular parallelepiped in cell cases (6).

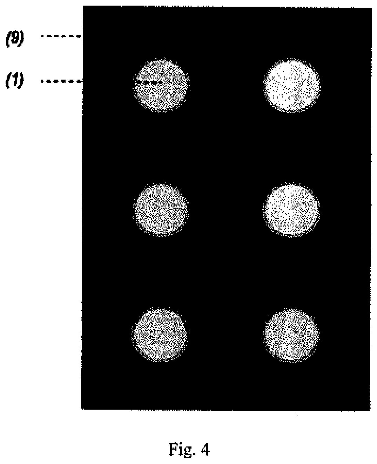

Figure 4 depicts a top view of the cell with elastic film (1) and plate (9) with openings and the film (1) located above the cell.

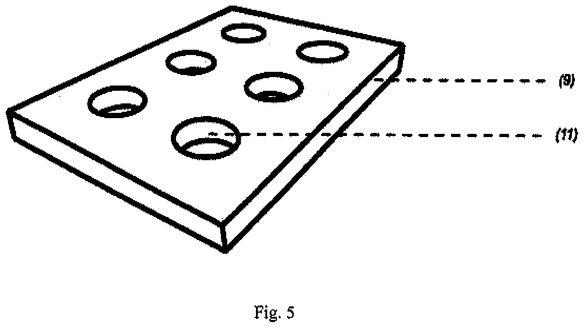

Figure 5 depicts a view of plate (9) with opening (11).
Figure 6 depicts a view of pin (3) having bulge (2).
Figure 7 depicts a view of pin (3) having bulge (2) and slot (5) having an internal thread.
Figure 8 depicts a view of cell case (6) with cavities (8) in the form of a rectangular parallelepiped.

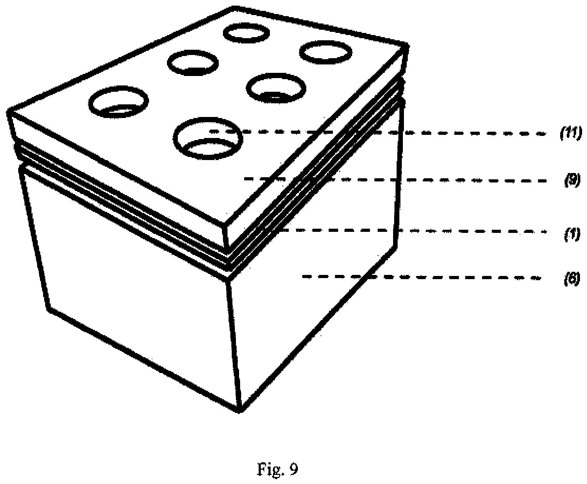

Figure 9 depicts a view of cell case (6), elastic film (1), and plate (9) with openings (11).
Figure 10 depicts a view of tablet (14) with cells (13) as an assembly.

### Detailed disclosure of the present invention

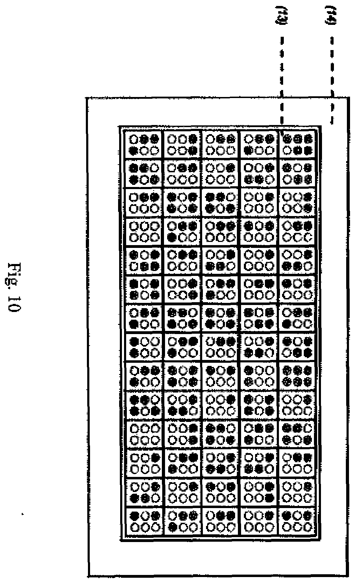

A device of the present invention for transmitting and receiving information by Braille can be made in the form of a single-line display, or in the form of a tablet (see, Fig. 10).

This electromechanical device forms the raised-dot elements of Braille font on a flat horizontal surface in one or several lines that can be read by tactile receptors of the user fingertips.

The device consists of cells (13), which form Braille characters arranged horizontally in one or several lines. Such arrangement is possible due to the compact cell size defined by the invented internal mechanism of cell (13) of the tablet used to form the raised-dots of Braille.

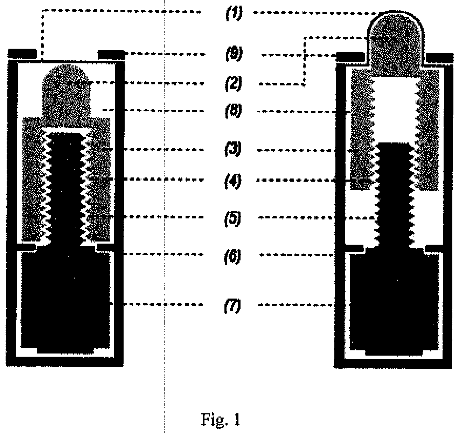

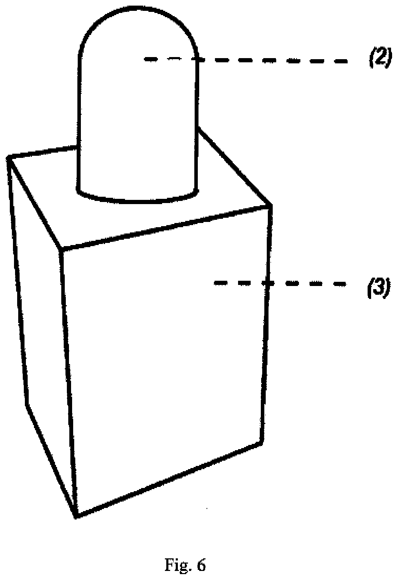

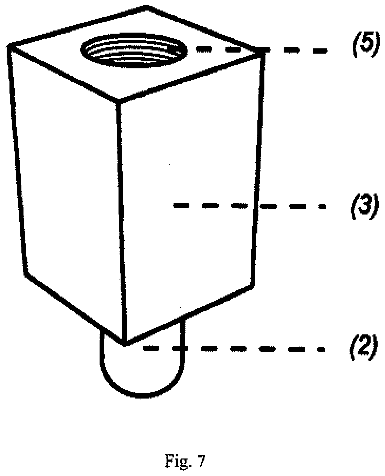

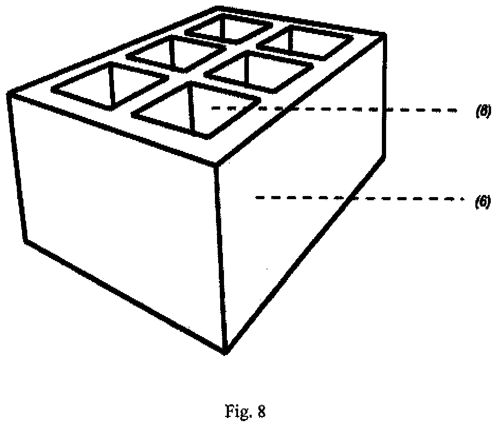

The cell of the tablet (see Fig. 8) consists of the cell case (6) having six or eight, depending on the type of the used Braille alphabet, cavities (8) in the form of rectangular parallelepipeds. Rotational actuators (7) are placed in cavities (8) (see, Fig. 1). Stepper motors can be used as the rotational actuators (7). Cavities (8) also contain rods (4) with external thread fixed on the actuators, and pins (3) containing a bulge (2) forming a relief defined as a raised-dot in Braille (see, Fig. 6), and a slot (5) having an internal thread which fits rods (4), (see, Fig. 7). A plate (9) with opening (11) is located on the top of this cell.

An elastic film that protects the device from falling into the internal mechanisms of destructive fat, dust and liquids can be placed between the plate and the cell.

The pin is screwed onto the rod (4) by the thread. The rod (4) is fixed on the actuator (7), which causes the rod to rotate. Rotational movements of the rod (4) are converted into translational movements of the pin (3), since the pin (3) is made in the form of a rectangular parallelepiped and located in the limited space of the cavity in the shape of a rectangular parallelepiped (8) of the cell case (6). The forward movement is straightforward and takes place up and down. During rotational movement of the rod (4) in one direction, the pin (3) rises up along the rod (4), and the bulge (2) of the pin protrudes above the plate (9), forming the raised-dot shape of a symbol of the Braille alphabet, while rotational movement of the rod (4) in the opposite direction the finger (3) lowers down the rod (4), and the bulge (2) of the pin (3) does not protrude beyond the level of the plate (9).

The device according to the present invention for transmitting and receiving information by Braille comprises:
- a housing,
- plurality of cells disclosed above,
- plurality of buttons located on the housing of the device under each cell,
- a actuator control unit functionally connected with the actuators,
- a means for communication with a computer, a smartphone or an Internet access point, functionally connected with the actuator control unit and with the buttons.

The device according to the present invention can be made in form of a tablet (14) (see, Fig. 10), and cells (13) which form symbols of Braille font are arranged in one line or several lines.

The device according to the present invention can function in the mode of receiving information, and in the mode of transmitting information.

The device according to the present invention may comprise a switch (not shown) that switches the device between these modes. Alternatively, switching between the specified modes can be done by pressing a specific single cell or combination of cells.

In the mode of receiving information, cells of the device of the present invention form an embossed text which can be written by a user.

To do this, the received information is converted into points of Braille, then it is transmitted to the drive control unit and form the embossed text using cells of the device.

Conversion of received information into Braille points can be carried out using software installed on a computer or a smartphone to which the device according to the present invention is connected, or using software installed in the device according to the present invention, for example, in a communication tool.

In the mode of transmitting information, cells of the device form Braille characters in the form of a keyboard layout. Any keyboard layout can be used depending on the tasks to be solved, and the layout may change depending on the method of use. For example, the keyboard layout can be adapted to enter text, to control any device, etc. It is possible to increase the number of actions performed from such keyboard, for example, by using combinations of pressed cells.

A mechanism (12) for closing the electrical circuit in form of a button is located under each cells. The button can be selected from membrane, mechanical, optical or electronic buttons. In one embodiment, it may be a button of the scissor mechanism of the keyboard.

The transmitted information is entered by pressing the corresponding cells of the device with formed Braille characters in the form of a keyboard layout and transmitted through a communication means to a computer, a smartphone or an Internet access point.

The entered information is transmitted to a computer or a smartphone to which the device according to the present invention is connected, and is subsequently processed using a software installed on the computer or the smartphone.

Alternatively, in the case of transmitting information, the entered information can be processed using a software installed on the device according to the present invention, for example, directly to an Internet access point.

Said communication means may be a wireless means transmitting data via Wi-Fi or Bluetooth protocol. Also, the communication means can be a wired means for transmitting data via a cable. In this case, an appropriate connector may be provided in the device according to the present invention.

The device according to the present invention may further comprise an integrated power supply. Alternatively, the device according to the present invention may use an external power supply.

While the present inventions are described in detail above, one skilled in the art will recognize that modifications and equivalent substitutions can be made, and such modifications and substitutions are within the scope of the present inventions defined by the appended claims.

## Claims

1. A cell of a device for transmitting and receiving information by Braille, comprising:
- cell cases with cavities in form of rectangular parallelepipeds,
- pins made in form of rectangular parallelepipeds and placed within the cavities of the cell cases, where each of these fingers has a bulge that forms a relief defined as one dot in Braille, and a slot having an internal thread,
- rods with external thread, which fits into the slots of the pins, placed in the cavities under the pins,
- actuators, on which the rods are fixed, to bring the rods into rotational motion,
- plate located above the cell and containing openings for the bulges of the pins.

2. The cell according to claim 1, wherein the cell comprises six or eight cavities in form of rectangular parallelepipeds.

3. The cell according to claim 1, wherein a protective elastic film is placed between the plate and the cell.

4. A device in form of a tablet for transmitting and receiving information by Braille, comprising:
- a housing,
- plurality of cells according to any of claims 1 to 3,
- plurality of buttons located on the housing of the device under each cell,
- an actuator control unit functionally connected with the actuators,
- a means for communication with a computer, a smartphone or an Internet access point, functionally connected with the actuator control unit and with the buttons.

5. The device according to claim 4, wherein the cells of the device of the present invention are arranged in one line or several lines.

6. The device according to claim 4, wherein the means of communication of the device according to the present invention is a wireless means transmitting data via Wi-Fi or Bluetooth protocol.

7. The device according to claim 4, wherein the means of communication of the device according to the present invention is a wired means transmitting data via a cable.

8. The device according to claim 4, further comprising an integrated power supply or the device uses an external power supply.

9. A method for transmitting and receiving information by Braille using the device according to any of claims 4 to 8, where:
- in the mode of receiving information, said information is converted into Braille raised-dot symbols, transmitted to the actuator control unit, and an embossed text is formed using the cells of the device,
- in the mode of transmitting information, cells of the device form Braille characters in the form of a keyboard layout, the transmitted information is entered by pressing the corresponding cells of the device, and transmitted information is transmitted via the communication means to a computer, a smartphone or an Internet access point.
